(19) Europäisches Patentamt
European Patent Office
Office européen des brevets

(11) **EP 3 051 722 A1**

(12) **EUROPEAN PATENT APPLICATION**

(43) Date of publication:
**03.08.2016 Bulletin 2016/31**

(51) Int Cl.:
*H04B 10/29* (2013.01)   *H04B 10/40* (2013.01)

(21) Application number: **15153491.4**

(22) Date of filing: **02.02.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventors:
• **Layec, Patricia
  91620 NOZAY (FR)**
• **Dorize, Christian
  91620 NOZAY (FR)**

(74) Representative: **Cabinet Camus Lebkiri
25, Rue de Maubeuge
75009 Paris (FR)**

(54) **An optical regenerator, an optical transceiver, and an associated optical regeneration system**

(57)      An optical regenerator (OR2) for regenerating optical signals, comprising a first regenerator receiver (RR1) for receiving a first optical signal (OS1) and a second regenerator receiver (RR2) for receiving a second optical signal (OS2), the optical regenerator (OR2) further comprising:
• a first optical to electrical device (OE1) adapted for cooperating with the first regenerator receiver (RR1) for converting the first optical signal (OS1) into a first electrical signal (ES1),
• a second optical to electrical device (OE2) adapted for cooperating with the second regenerator receiver (RR2) for converting the second optical signal (OS2) into a second electrical signal (ES2),
• a signals combiner (SC), adapted to combine the first electrical signal (ES1) and the second electrical signal (ES2) for generating a combined electrical signal (CES),
• an electrical to optical device (EO1) for converting the combined electrical signal (CES) into the combined optical signal (COS)
• a regenerator transmitter (RT1), for transmitting the combined optical signal (COS).

FIG. 9

**Description**

**FIELD OF THE INVENTION**

The present invention relates to optical communication network.

**BACKGROUND OF THE INVENTION**

The realm of telecommunication has evolved drastically for the last decades, driven by new technologies and new habits of consumers. Communication networks have evolved to match the never ending increase of content request. Optical communication networks are key elements to sustain higher rate of content deliveries. Optical signals carry aggregated data between nodes of an optical infrastructure that involves very high commutation capabilities, but optical signals can also be brought to the local loop used for the last mile telecommunications. Density of optical communications networks has increased to match content demand. Density can be higher in a local area, for example as more buildings are wired with fiber terminations, but density can be higher also in terms of macro area, for example as more areas are getting interconnected through optical links. Higher density means higher optical loss due to the greater distance of the course of optical signals, and due to the higher required connectivity.

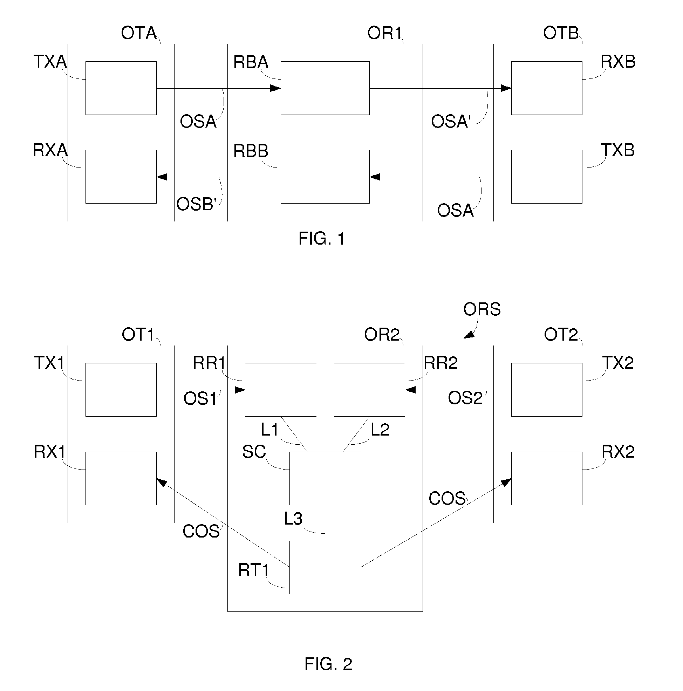

To guarantee acceptable data rates of optical fibers, optical regenerator can be used. Typically metro area covered by an optical meshed network heavily relies on optical regenerators that are able bearing with optical loss due to high connectivity degree of optical nodes. Referring to figure FIG. 1, a simplified optical regenerator, the first optical regenerator OR1, is depicted. Such optical regenerator is located on the course of optical fibers that connect optical nodes, such as an optical transceiver OTA and another optical transceiver OTB. The purpose of the first optical regenerator OR1 is to receive optical signals and regenerate them for increasing their reach. It is particularly adapted to keep track of optical signals that are transiting through many optical nodes, suffering from optical losses while crossing optical converters, switches, filters, etc., which is often the case in urban area optical communication network. In some cases it is needed to insert multiple optical regenerators along the lightpath in order to ensure proper distribution of optical signals. The first optical regenerator OR1 receives from the optical transceiver OTA, an optical signal OSA that carries data to be delivered to the other optical transceiver OTB. The received optical signal OSA is decoded, then recoded by a regeneration block RBA comprised in the first optical regenerator OR1, for being further transmitted in direction of the other optical transceiver OTB, the optical signal OSA being then regenerated into a regenerated optical signal OSA'. Similarly the first optical regenerator OR1 is able to regenerate another optical signal OSB carrying data coming from the other optical transceiver OTB and addressed to the first optical transceiver OTA. The other optical signal OSB is decoded and recoded by another regeneration block RBB comprised in the first regenerator OR1, for being then transmitted as another regenerated optical signal OSB'.

A major constraint of an optical regenerator such as the first optical regenerator OR1 is that it requires number of receiving and transmitting blocks that should correspond to the number of optical nodes connected to the optical regenerator. Optical regenerators usually perform at least two optoelectronics operation for regenerating one optical signal, which involves complex and sensitive electronic circuitry that can be costly in terms of design and components prices, and in terms of energy consumption. For example, for regenerating the optical signal OSA, a receiver and transmitter blocks comprising respectively optical to electrical converter and electrical to optical converter are needed. Similarly the other optical signal OSB requires the first regenerator OR1 to comprise receiver and transmitter blocks comprising ad-hoc optical to electrical converter and electrical to optical converter. Present regenerator architecture involves four optoelectronics devices for regenerating two different optical signals input.

It is then needed to modify optical regeneration architecture to lower costs of optical regenerators and improve energy efficiency.

**SUMMARY OF THE INVENTION**

The invention aims to remedy all or some of the disadvantages of the above identified prior art. It particularly proposes ways for the optical regeneration of optical signals.

A first aspect of the invention relates then to an optical regenerator for regenerating optical signals, comprising a first regenerator receiver for receiving a first optical signal and a second regenerator receiver for receiving a second optical signal, the optical regenerator further comprising:

- a first optical to electrical device adapted for cooperating with the first regenerator receiver for converting the first optical signal into a first electrical signal,
- a second optical to electrical device adapted for cooperating with the second regenerator receiver for converting the second optical signal into a second electrical signal,

- a signals combiner adapted to combine the first electrical signal and the second electrical signal for generating a combined electrical signal,
- an electrical to optical device for converting the combined electrical signal into the combined optical signal,
- a regenerator transmitter for transmitting the combined optical signal.

Thus, thanks to these features, the optical regenerator is adapted for regenerating optical signals. The signals combiner is enabled to combine the first electrical signal and the second electrical signal resulting from the respective conversion from the first optical signal and the second optical signal. Said signals combiner is generating the combined electrical signal that is optically transmitted as the combined optical signal. The signals combiner advantageously provides only one electrical signal to be optically transmitted. It allows the second regenerator to use a single optical transmitter. The optical regenerator offers a simplified regeneration architecture. It is advantageous for reducing design cost and consumption energy of the optical regenerator while ensuring reliable optical regeneration.

According to various embodiments, such optical regenerator comprises one or more of the features below, which should be considered in any possible technical combinations:

- the signals combiner is adapted to perform a "XOR" logical operation for combining the first electrical signal and the second electrical signal for generating the combined electrical signal,
- the signals combiner is adapted to weight the first electrical signal with a first coefficient and to weight the second electrical signal with a second coefficient, and to combine the respective weighted first electrical signal and weighted second electrical signal for generating the combined electrical signal,
- the first coefficient and the second coefficient are normalized complex values, the second coefficient being dependent of the first coefficient,
- the regenerator transmitter is adapted to transmit the combined optical signal on at least two optical ports comprised in the optical regenerator.

A second aspect of the invention relates then to an optical transceiver for processing an optical receive signal, said optical transceiver comprising:

- an optical transmitter,
- an electrical to optical device,
- an optical receiver adapted for receiving the optical receive signal,
- an optical to electrical device adapted for converting the optical receive signal into an electrical receive signal,
- a signal extractor,
- an output from the electrical to optical device being connected to an input from the optical transmitter,
- an output from the optical receiver being connected to an input from the optical to electrical device,
- an output from said optical to electrical device being connected to an input from the signal extractor,

said signals extractor being adapted for extracting an informative electrical signal from the electrical receive signal, said electrical receive signal comprising the combination of said informative electrical signal and of a delayed electrical transmit signal, said electrical transmit signal having been converted into an optical transmit signal by the electrical to optical device, said optical transmit signal having been transmitted by the optical transmitter.

Thus, thanks to these features, the optical transceiver is adapted for processing regenerated optical signal. Said optical transceiver is enabled for cooperating with the optical regenerator. The signals extractor is adapted to process the electrical receive signal and the delayed electrical transmit signal for extracting the informative electrical signal, said informative electrical signal and electrical transmit signal having been used for generating the optical receive signal. The signals extractor enables thus the optical transceiver to receive an optical receive signal that comprises two different signals. It allows a flexible optical transceiver that cooperates with simplified regeneration architecture.

According to various embodiments, such optical transceiver comprises one or more of the features below, which should be considered in any possible technical combinations:

- the signals extractor cooperates with a delay means adapted for delaying the electrical transmit signal and wherein the signals extractor is adapted to extract the informative electrical signal from the electrical receive signal according to said electrical transmit signal delayed by said delay means,
- the signals extractor is adapted to perform a "XOR" logical operation between the electrical receive signal and the electrical transmit signal delayed by the delay means for extracting the informative electrical signal,
- the signals extractor is adapted to extract the informative electrical signal from the electrical receive signal according to a first coefficient and a second coefficient, the electrical receive signal being generated from the combining from the electrical transmit signal weighted by the first coefficient and the informative electrical signal weighted by the second coefficient,

- the signals extractor is adapted to extract the informative electrical signal from the electrical signal by cancelling a contribution of the electrical transmit signal weighted by the first coefficient on said electrical receive signal,
- the optical transceiver further comprising a channel estimator adapted for performing a channel estimation on the electrical receive signal according to the electrical transmit signal delayed by the delay means, said channel estimator cooperating with the signals extractor for cancelling the contribution of the electrical transmit signal weighted by the first coefficient on said electrical receive signal.

A third aspect of the invention relates then to an optical regeneration system comprising:

- an optical transceiver, for transmitting a first optical signal and for receiving a combined optical signal,
- an optical regenerator, for receiving the first optical signal and a second optical signal, and for generating the combined optical signal according to said first optical signal and said second optical signal.

Thus, thanks to these features, the optical regeneration system is adapted for the optical regeneration of optical signals. It enables the optical regeneration system to regenerate multiple optical signals into a single optical signal. The optical regeneration system is then simplified at the optical regenerator side. It allows to reduce the costs design and the energy consumption of the effective optical regeneration from the optical regeneration system. The optical regeneration system is further enabled to process optical regenerated signal by the optical regenerator by the optical transceiver. Said optical transceiver is adapted to process said regenerated signals for extracting the second electrical signal used by the optical regenerator in combination with the first electrical signal for generating the combined optical signal. The optical transceiver advantageously offers cooperation with the optical regenerator which allows to simplify the optical regeneration architecture. Said simplification enables to lower the capital expenditures and the operational expenditures of the optical regeneration system.

A fourth aspect of the invention relates then to a method for regenerating optical signals performed by an optical regenerator, said method comprising the following steps:

- receiving a first optical signal from a first optical transceiver,
- receiving a second optical signal a from a second optical transceiver a,
- converting the first optical signal into a first electrical signal,
- converting the second optical signal into a second electrical signal,
- combining the first electrical signal and the second electrical signal into a combined electrical signal,
- converting the combined electrical signal into a combined optical signal,
- transmitting the combined optical signal.

Thus, thanks to these features, the method for regenerating optical signals enables the optical regenerator to generate the combined electrical signal resulting from the combination of the first electrical signal and the second electrical signal, respectively converted from the first optical signal and the second optical signal, and then to transmit the combined optical signal converted from said combined electrical signal. The method offers the optical regenerator a reliable combination of steps for regenerating two optical signals into a single optical signal. It allows to simplify the process of optical regeneration and then allows to decrease the design costs and operational costs of optical regeneration architecture.

A fifth aspect of the invention relates then to a method for processing an optically regenerated optical signal performed by an optical transmitter, said method comprising the following steps:

- receiving an optical receive signal an optical regenerator,
- converting the optical receive signal into an electrical receive signal,
- extracting an informative electrical signal from the electrical receive signal, said electrical receive signal being generated from the combination of said informative electrical signal and a delayed electrical transmit signal that was transmitted by the optical transmitter.

Thus, thanks to these features, the method for processing an optically regenerated signal enables the optical transceiver to manage the optical receive signal being generated from the conversion then the combination of the informative signal and the electrical transmit signal transmitted by said optical transceiver. The method offers the optical transceiver a reliable processing of the optical receive signal that is generated from the combination of two electrical signals respectively the informative electrical signal and the electrical transmit signal transmitted by the optical transceiver.

## BRIEF DESCRIPTION OF THE FIGURES

Some embodiments of the present invention are now described, by way of example only, and with reference to the accompanying drawings, in which:

- FIG. 1 is a schematic block diagram of an optical communication network comprising an optical regenerator,
- FIG. 2 is a schematic block diagram of an optical communication network comprising an optical regeneration system according to embodiments of the invention,
- FIG. 3 is a schematic block diagram of an optical regenerator according to an embodiment of the invention,
- FIG. 4 is a schematic block diagram of a signals combiner according to an embodiment of the invention,
- FIG. 5 is a schematic block diagram of another signals combiner according to an embodiment of the invention,
- FIG. 6 is a schematic block diagram of an optical transceiver according to an embodiment of the invention,
- FIG. 7 is a schematic block diagram of a signals extractor according to an embodiment of the invention,
- FIG. 8 is a schematic block diagram of another signals extractor cooperating with a channel equalizer according to an embodiment of the invention,
- FIG. 9 is a schematic block diagram of functions from an optical regenerator according to an embodiment of the invention,
- FIG. 10 is a schematic block diagram of functions from another optical regenerator according to an embodiment of the invention,
- FIG. 11 is a schematic block diagram of functions from an optical transceiver according to an embodiment of the invention,
- FIG. 12 is a schematic block diagram of functions from another optical transceiver according to an embodiment of the invention.

The same reference number represents the same element to the same type of element on all drawings, unless stated otherwise.

## DESCRIPTION OF EMBODIMENTS

The figures and the following description illustrate a specific exemplary embodiment of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

In the following description, well-known functions or constructions by the man skilled in the art are not described in detail since they would obscure the invention in unnecessary detail.

In the following description of the figures, the elements designated with arrows are depicting either optical signals carried on optical fibers or electrical signals carried on wired connections. The orientations of the arrows symbolize the propagation direction of the optical and/or electrical signals. Such schematic representations are non limiting and serve only for the understanding of the invention.

Referring to figure **FIG. 2,** a schematic block diagram of an optical communication network comprising an optical regeneration system according to embodiments of the invention is depicted.

According to embodiments of the invention, an optical regeneration system ORS comprises a second optical regenerator OR2 for regenerating optical signals and a first optical transceiver OT1 for transmitting and receiving optical signals.

The first optical transceiver OT1 transmits a first optical signal OS1 addressed to a second optical transceiver OT2. Said second optical transceiver OT2 transmits a second optical signal OS2 addressed to the first optical transmitter OT1.

The second regenerator OR2 is located on the respective lightpaths of the first optical signal OS1 and the second optical signal OS2 for ensuring that said optical signals can reach their respective destination nodes.

The first optical transceiver OT1 comprises a first optical transmitter TX1 and a first optical receiver RX1. The first optical transmitter TX1 is in charge of transmitting the first optical signal OS1, generated from a first electrical signal not depicted in figure FIG. 2. Such first electric signal carries data that are addressed to the second optical transceiver OT2, said data either being control data or informative data such as signaling messages or data payloads such as multimedia content either distributed in circuit mode or in packet mode. The first electrical signal is a digital signal which is converted from the digital domain into the optical domain by an electrical to optical device not depicted on figure FIG. 2. The first optical signal OS1 is conveyed through optical fibers that are eventually connected to other optical devices such as optical switche or intermediate optical transceiver or optical amplifier or classical regenerator. These optical elements that are placed on a lightpath between the first optical transceiver OT1 and the second optical transceiver OT2 are degrading characteristics from the first optical signal OS1. The second optical regenerator OR2 is then used to regenerate the first optical signal OS1 to ensure that said first optical signal OS1 can reach its destination.

The second optical transceiver OT2 comprises a second optical transmitter TX2 and a second optical receiver RX2. The second optical transmitter TX2 is in charge of transmitting the second optical signal OS2, generated from a second electrical signal not depicted in figure FIG. 2. Such second electric signal carries data that are addressed to the first optical transceiver OT1, said data either being control data or informative data such as signaling messages or multimedia content data packets. The second electrical signal ES2 is a digital signal which is converted from the digital domain into the optical domain by another electrical to optical device not depicted on figure FIG. 2. The second optical signal OS2 is conveyed through optical fibers that are eventually connected to other optical devices such as optical switches or intermediate optical transceiver. These optical elements that are placed on a lightpath between the first optical transceiver OT1 and the second optical transceiver OT2 are degrading characteristics from the second optical signal OS2. The second optical regenerator OR2 is then used to regenerate the second optical signal OS2 to ensure that said second optical signal OS2 can reach its destination.

The second optical regenerator OR2 comprises a first regenerator receiver RR1 connected to an optical fiber for receiving the first optical signal OS1 from the first optical transceiver OT1. The first regenerator receiver RR1 is charge of processing the first optical signal OS1. In non limiting examples the first regenerator receiver RR1 comprises optical ports that are fed by optical fibers with optical signals. It is adapted to perform operations of shaping, filtering, selecting wavelength etc on optical signals. In a non limiting example, the first regenerator receiver RR1 cooperates with a third optical to electrical device, not depicted in figure FIG. 2, for converting the first optical signal OS1 into an electrical signal. In another non limiting example, the first regenerator receiver RR1 comprises the optical to electrical device and is adapted to output the electrical signal generated from the conversion of the first optical signal OS1. The electrical signal outputted from the conversion of said first optical signal OS1 is a delayed replication from the first electrical signal that was processed by the first optical transceiver OT1, the delay being introduced by the time needed for propagating the first optical signal OS1 from the first transmitter TX1 up to the first regenerator receiver RR1. It is made reference hereinafter by the term "the first electrical signal" the informative signal to be conveyed from the first optical transceiver OT1 to the second optical transceiver OT2 and either designating the original first electrical signal as considered from the first optical transceiver OT1 standpoint, or designating the electrical signal obtained by converting the first optical signal OS1 received by the second regenerator OR2.

The second optical regenerator OR2 comprises a second regenerator receiver RR2 connected to an optical fiber for receiving the second optical signal OS2 from the second optical transceiver OT2. The second regenerator receiver RR2 is charge of processing the second optical signal OS2. In a non limiting example, similarly to the first regenerator receiver RR1, the second regenerator receiver RR2 cooperates with a fourth optical to electrical device, not depicted in figure FIG. 2, for converting the second optical signal OS2 into an electrical signal. In another non limiting example, the second regenerator receiver RR2 comprises the fourth optical to electrical device and is adapted to output the electrical signal generated from the conversion of the second optical signal OS2. The electrical signal outputted from the conversion of said second optical signal OS2 is a delayed replication from the second electrical signal that was processed by the second optical transceiver OT2, the delay being introduced by the time needed for propagating the second optical signal OS2 from the second transmitter TX2 up to the second regenerator receiver RR2. It is made reference hereinafter by the term "the second electrical signal" the informative signal to be conveyed from the second optical transceiver OT2 to the first optical transceiver OT1 and either designating the original second electrical signal as considered from the second optical transceiver OT2 standpoint, or designating the electrical signal obtained by converting the second optical signal OS2 received by the second regenerator OR2.

The first electrical signal and the second electrical signal, respectively converted from the first optical signal OS1 and the second optical signal OS2 are further processed by a signals combiner SC. In an example said signals combiner SC is linked to the first regenerator receiver RR1 and to the second regenerator receiver RR2 through the respective first link L1 and second link L2. Such links are internal links from the second optical regenerator OR2 and are adapted to convey electrical signals between elements or functionalities of said second optical regenerator OR2.

The signals combiner SC is a device adapted to perform combination of the first electrical signal and the second electrical signal. In examples the signals combiner SC is a dedicated device comprised in the second optical regenerator OR2, or its functionality is achieved by elements or components from said second regenerator OR2 such as digital signal processor, digital logic circuitry etc. that are part of the processing capabilities of the regenerator.

The signals combiner SC outputs a combined electrical signal, not depicted in figure FIG. 2 that is provided to a regenerator transmitter RT comprised in the second optical regenerator OR2. An intermediate electrical to optical device may be also involved to convert the combined electrical signal into the optical domain prior to providing it to the regenerator transmitter, or in another case such electrical to optical conversion may be performed by the regenerator transmitter.

The regenerator transmitter RT is in charge of transmitting the optically converted combined electrical signal, depicted as a combined optical signal COS in figure FIG. 2. Said combined optical signal COS is transmitted in both directions to the first optical transceiver OT1 and the second optical transceiver OT2. It shall be noticed that the first optical signal OS1 and the second optical signal OS2 are optically regenerated by the second optical regenerator in the form of the combined optical signal COS that comprises the information from the respective first electrical signal, originally transmitted by the first optical transceiver OT1, and second electrical signal, originally transmitted by the second optical transceiver OT2.

The second optical regenerator OR2 advantageously uses the single regenerator transmitter RT to dispatch and transmit the combined optical signal to the first optical transceiver OT1 and the second optical transceiver OT2. Using a single regenerator transmitter allows to reduce the complexity, the costs, and the energy consumption of the second optical regenerator OR2.

It should be noted that the different optical signals that are either transmitted, or received by the respective first optical transceiver OT1, second optical transceiver OT2 and second optical regenerator OR2 may be carried over optical fibers by using the same wavelengths or sets of wavelengths, but it could be also different wavelengths for each segments that are interconnecting these optical elements. Moreover optical fibers and optical devices involved in the respective first optical transceiver OT1, second optical transceiver OT2 and second optical regenerator OR2 may have different transport capacities in terms of optical throughput. The possible arrangement of the optical networks that comprises the mentioned optical nodes such as optical transceivers and regenerator are a matter of configuration and network layout that are usually under the control of the network operator. For example, the first optical signal OS1 may be carried over with a first wavelength, the second optical signal OS2 with a second wavelength, the combined optical signal COS in the direction of the first optical transceiver OT1 with a third wavelength, and with a fourth wavelength in the direction of the second optical transceiver OT2, each wavelength being different from another.

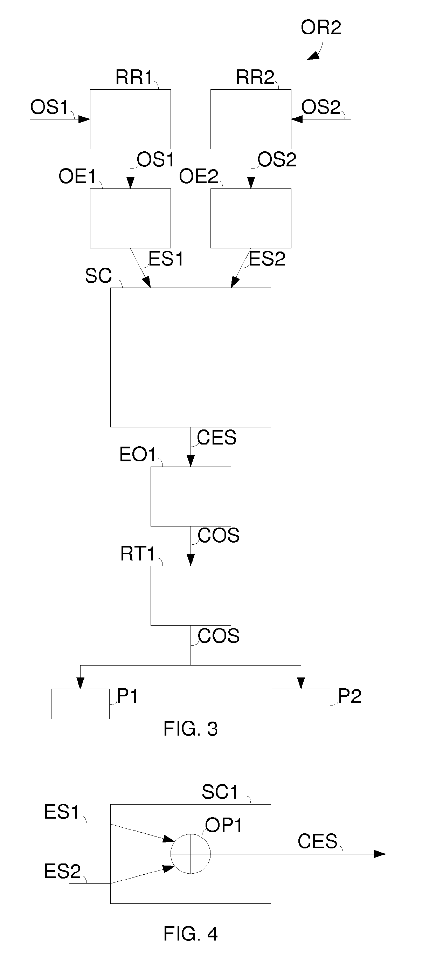

Referring to figure **FIG. 3,** a schematic block diagram of an optical regenerator according to an embodiment of the invention is depicted.

In an embodiment, the functionalities of the second optical regenerator OR2 are further detailed. More particularly the second optical regenerator OR2 is adapted for receiving, processing and combining the first optical signal OS1 and the second optical signal OS2 for generating the combined optical signal COS.

The first optical signal OS1 is carried over various segments of optical fibers from the first optical transceiver OT1 up to the second optical regenerator OR2. Said first optical signal OS1 is received by the first regenerator receiver RR1. It is then converted into the digital domain by the first optical to electrical device OE1 that outputs the first electrical signal ES1.

The second optical signal OS2 is carried over various other segments of optical fibers from the second optical transceiver OT2 up to the second optical regenerator OR2. Said second optical signal OS2 is received by the second regenerator receiver RR2. It is then converted into the digital domain by the second optical to electrical device OE2 that outputs the second electrical signal ES1.

The first electrical signal ES1 and the second electrical signal ES2 are provided to the signals combiner SC, in charge of combining them. The signals combiner SC outputs the combined electrical signal CES that comprises both the information from the first electrical signal ES1 and the information from the second electrical signal ES2.

The signals combiner provides the combined electrical signal CES to a first electrical to optical device E01 in charge of converting said electrical signal into the optical domain. The first electrical to optical device E01 generates the combined optical signal COS.

The combined optical signal COS is further handled by the regenerator transmitter RT that is in charge of effectively transmitting on one or more optical ports connected to optical fibers the combined optical signal COS. Said transmission of the combined optical signal COS targets the first optical transceiver OT1, and targets also the second optical transceiver OT2. In an example the regenerator transmitter RT transmits the combined optical signal on a single optical port from which two lightpaths are originating and terminating respectively at the first optical transceiver OT1 and at the second optical transceiver OT2. Such arrangement is practical in case the two lightpaths are configured with the same wavelength for propagating optical signals. In another example the regenerator transmitter RT transmits the combined optical signal COS through a first optical port P1 and a second optical port P2. Such arrangement is convenient in case the two lightpaths with the first optical transceiver OT1 and the second optical transceiver OT2 as respective optical endpoints are using different wavelengths. In another example, the regenerator transmitter RT outputs the combined optical signal COS on a single optical port, which is further connected to an optical splitter that splits said combined optical signal COS in the respective directions of the first optical transceiver OT1 and the second optical transceiver OT2.

It should be noted that figure FIG. 3 depicts a non limiting arrangement of the devices comprised in the second optical regenerator OR2. Other arrangements of the devices are possible. In an example the first optical to electrical device OE1 may be comprised in the first regenerator receiver RR1, said first regenerator receiver RR1 comprising other devices and functions such as compensation delay, forward error correctors etc. not depicted on figure FIG. 3. In another example the signals combiner SC and the first electrical to optical device E01 are comprised in the first regenerator transmitter RT1, said first regenerator transmitter RT1 further comprising other devices such as a laser pulse device combined with IQ modulators not depicted on figure FIG. 3.

Referring to figure **FIG. 4,** a schematic block diagram of a signals combiner according to an embodiment of the invention is depicted.

In an embodiment the first electrical signal ES1 and the second electrical signal ES2 are combined by a first signals combiner SC1 which is a variant from the signal combiner SC. The bit streams of the first electrical signal ES1 and the second electrical signal ES2 are combined together by the first operator OP1. Said first operator OP1 is an exclusive or "XOR" logical operation. In an example the operation of the combination can be formulated as "first electrical signal ES1 $\oplus$ second electrical signal ES2" which results in the generation of the combined electrical signal CES. The first operator OP1 is advantageous for combining the first electrical signal ES1 and the second electrical signal ES2 as it can be designed with a low level of complexity which allows the first operator OP1 to process in real-time high volume of samples. Moreover it allows also a combination of signals that can be efficiently separated later on. In an example the "XOR" logical operation is performed by a high speed logic circuit such as a Field Programmable Gate Array (FPGA) tailored for processing high bandwidth data streams. In other examples, the "XOR logical operation" is performed by an Application Specific Integrated Circuit (ASIC) or a Digital Signal Processor (DSP).

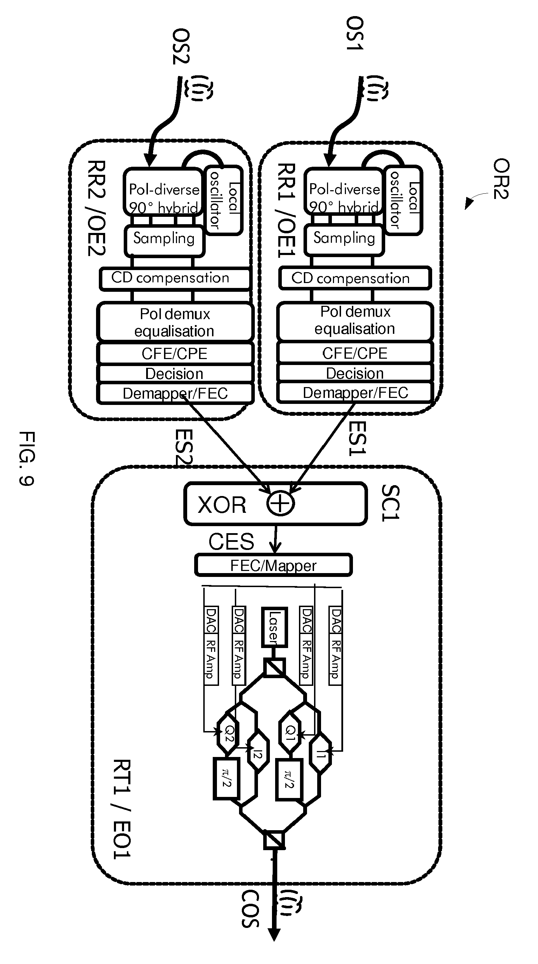

An example of this embodiment is further depicted in figure FIG. 9.

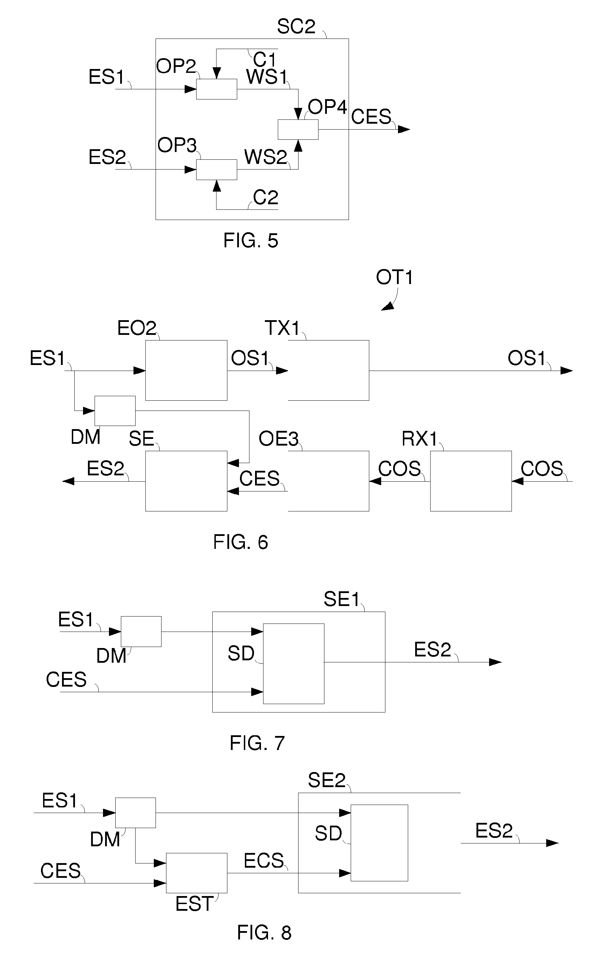

Referring to figure **FIG. 5,** a schematic block diagram of another signals combiner according to an embodiment of the invention is depicted.

In an embodiment the first electrical signal ES1 and the second electrical signal ES2 are combined by a second signals combiner SC2 which is a variant from the signal combiner SC. The first electrical signal ES1 is processed by a second operator OP2 comprised in the second signals combiner SC2. A first coefficient C1 is another input from the second operator OP2, said coefficient applies to the processing of the first electrical signal ES1. The second operator OP2 outputs a first weighted electrical signal WS1. In an example, the first electrical signal ES1 is weighted by the first coefficient C1 which is a complex coefficient for weighting characteristics of electrical signals.

In a similar manner, the second electrical signal ES2 is processed by a third operator OP3 comprised in the second signals combiner SC2. A second coefficient C2 is another input from the third operator OP3, and applies to the processing of the second electrical signal ES2. The third operator OP3 outputs a second weighted electrical signal WS2. In an example, the second electrical signal ES2 is weighted by the second coefficient C2 which is a complex coefficient for weighting characteristics of electrical signals.

In an example, the first coefficient C1 and the second coefficient C2 are weighting coefficients or factors that are chosen according to an alpha factor:

- C1 = alpha
- C2 = 1 - alpha

so that the combination of the respective first weighted electrical signal WS1 and second weighted electrical signal WS2 remains normalized. The second coefficient C2 is dependent on the first coefficient C1.

In another example, the alpha factor is used to determine the first coefficient C1 and second coefficient C2, but the attenuation induces by said alpha weighting factor is applied to the electrical signal issued from the optical signal that has suffered the greatest degradation to reach the second optical regenerator OR2. For example the alpha factor may be chosen equals to 0.9, the second optical signal OS2 having transited on a longer optical fiber than the first optical signal OS1, the second coefficient C2 is set to be equal to alpha factor, whereas the first coefficient C1 is set to be equal to 1 - alpha.

In another example, the first coefficient C1 and second coefficient C2 are chosen independently.

A fourth operator OP4 further processes the weighted electrical signals. It combines the first weighted electrical signal WS1 and the second weighted electrical signal WS2 together for outputting the combined electrical signal CES. Said combined electrical signal CES is converted into the combined optical signal. The fourth operator OP4 is an operator enabled to operate on high data rates. In an example, the fourth operator OP4 is an electrical signal adder. In another example, the fourth operator OP4 is an electrical signal mixer. In yet another example, the fourth operator OP4 is a processing function embedded in a digital signal processor in a dedicated logic device.

In an example, the second optical regenerator OR2 is performing superposition coding through the contribution of the second signals combiner SC2. The outputted combined optical signal COS, converted from the combined electrical signal CES can be depicted as [(first coefficient C1*first optical signal OS1) + (second coefficient C2*second optical signal OS2)]. In the example wherein the alpha factor is used to set the first coefficient C1 and second coefficient C2, and by using the notation of the figures, the output of combined optical signal COS could be depicted as: COS = alpha*OS1 + (1-alpha)*OS2.

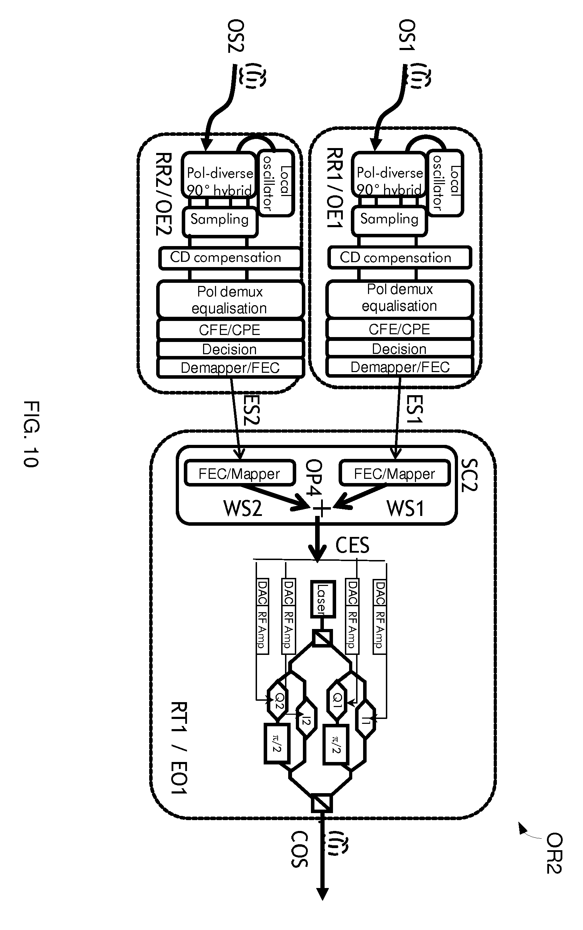

An example of this embodiment, and in particular related to the superposition coding, is further depicted in figure FIG. 10.

Referring to figure **FIG. 6,** a schematic block diagram of an optical transceiver according to an embodiment of the invention is depicted.

In an embodiment, the first optical transceiver OT1 comprises means for transmitting the first optical signal OS1 and for receiving optical signals, such as the combined optical signal COS.

The first electrical signal ES1, that comprises data to be transmitted to the second optical transceiver OT2, is converted into the optical domain by an electrical to optical converter such as a second electrical to optical device E02. An output from said second electrical to optical device E02 is connected to an input from the first transmitter TX1. The first optical signal OS1, generated from the conversion of the first electrical signal ES1, is transmitted by the first transmitter TX1.

An incoming optical signal, originated from the second optical transceiver OT2, and having transited through the second optical regenerator OR2 is received by the first receiver RX1 comprised in the first transceiver OT1. In an embodiment, said incoming optical signal is the combined optical signal COS, generated from the first optical signal OS1 and the second optical signal OS2 by the second optical regenerator OR2. The first receiver RX1 outputs the received combined optical COS to an input from a third optical to electrical device OE3 for converting it into the combined electrical signal CES. It should be noted that the received combined optical signal COS is a delayed version of the combined optical signal COS outputted by the second optical regenerator OR2, said delayed version including impairments, attenuation, additional noise etc. introduced while the light signal is transiting on the lightpath from the second optical regenerator OR2 to the first transceiver OT1. Similarly the combined electrical signal CES obtained from the conversion of the received combined optical signal COS is a version of a combined electrical signal CES as generated within the second optical regenerator OR2, from a first optical signal OS1 and a second optical signal OS2. It is not an exact version of the output the signals combiner SC from the second optical regenerator OR2 since the present combined electrical signal CES is obtained from the received combined optical signal COS that may have suffer from modifications or alterations while propagating along the lightpath. Such modifications or alterations on the combined electrical signal CES may be mitigated according to further processing that is described later on.

The first optical transceiver OT1 further comprises a delay means DM. The delay means DM is adapted to delay the first electrical signal ES1, and to provide a delayed first electrical signal ES1. Such delay means DM is a delay line in an example. In another example the delay means DM is a buffer adapted to store samples from the combined electrical signal CES. The characteristics of such buffer are dependent of the context of the considered optical network. For example for a large network, with optical regeneration spaced from 2000km from the transmit side and the receive side, the delay to be managed by the delay means DM is 20ms. Considering a forward error corrector (FEC) able to manage a 100 gigabit per second (Gbps) data stream, Quadrature Phase Shift Keying (QPSK) modulated with four 25 Gbps data stream inputs, the size of the buffer should be around 62.5 Mega Bytes (Mbytes). For example, in a smaller network, with optical regeneration spaced from 200km from the transmit side and the received side, the delay to be managed by the delay means DM is 2ms. Considering a 100 Gbps data stream QPSK modulated, the size of the buffer should be 6.25 Mbytes.

The third optical to electrical device OE3 is adapted to cooperate with a signals extractor SE, comprised in the first optical transceiver OT1, by providing to said signals extractor SE the combined electrical signal CES. In an example, an output from the third optical to electrical device OE3 is connected to an input from said signals extractor SE. The delay means DM is also adapted to cooperate with the signals extractor SE by providing to said signals extractor SE the delayed first electrical signal ES1. The signals extractor SE is adapted to process these two inputs for extracting from the combined electrical CES the second electrical signal ES2. Said second electrical signal ES2 is a delayed version from a second electrical signal ES2 transmitted by the second optical transmitter OT2 and having reached the first optical transmitter OT1 through the means of the combined optical signal COS generated by the second optical regenerator OR2. The signals extractor SE is adapted to perform the extraction of the second electrical signal ES2 from the received combined optical signal, according to the generation of said combined optical signal by the second optical regenerator OR2. In an example the signals extractor SE is adapted to perform uncombining of the delayed first electrical signal ES1 on the converted combined electrical signal CES for extracting the second electrical signal ES2.

In an embodiment, the signals extractor SE is adapted to perform a "XOR" logical operation. Said "XOR" logical operation is the uncombining operation, that uses the first electrical signal ES1 and the combined electrical signal CES. The "XOR" logical operation results in the generation of the second electrical signal ES2. Said generated second electrical signal ES2 is a replication of the electrical signal initially transmitted by the second optical transceiver OT2 and carrying the data intended to the first optical transceiver OT1.

It should be noted that the arrangement of the devices from the second optical regenerator OR2 is not limitative. Other arrangements and combination of devices are possible. For examples, the second electrical to optical device E02 may be comprised in the first optical transmitter TX1, and the third optical to electrical device OE3 may be comprised in the first optical receiver RX1.

Referring to figure **FIG. 7,** a schematic block diagram of a signals extractor according to an embodiment of the invention is depicted.

In an embodiment a first signals extractor SE1 is a variant from the signals extractor SE. The signals extractor SE1 is adapted to extract an electrical signal from an input electrical signal which is a combination of weighted electrical signals. The signals extractor SE1 is configured with the first coefficient C1 and the second coefficient C2, and uses the received combined electrical signal CES and the delayed first electrical signal ES1. Using said delayed first electrical signal ES1, the signals extractor SE1 is enabled to estimate the contribution of the weighted first electrical signal ES1, originally used by the second optical regenerator OR2 for producing the combined optical signal COS. Said contribution estimation allows the signals extractor SE1 to extract from the received combined electrical signal CES the second electrical signal ES2, by cancelling the contribution of the weighted first electrical signal ES1.

In an example the contribution estimation is performed by a superposition coding detector SD, which is adapted to detect and process an electrical signal generated from superposition coding of at least two informative electrical signals. More particularly the superposition coding detector is enabled to process electrical signals such as the combined electrical signal CES generated by the signals combiner SC from the second optical regenerator OR2.

In an example the direct cooperation between the delay means DM and the signals extractor SE1 such as the superposition coding detector is advantageous in the cases wherein the first optical transceiver OT1 is enabled to perfectly estimates the channels on which the first optical signal OS1 and the combined optical signal COS are propagating. Such perfect channels estimations allow the signals extractor SE to efficiently separate the second electrical signal ES2 from the delayed but well-known first electrical signal ES1. In such example, the superposition coding detector SD is removing the contribution of the first electrical signal ES, considered as an interfering message, and this cancellation is perfect since the first electrical signal ES is perfectly known and fed by the transmitter branch through the delay means DM.

Referring to figure **FIG. 8,** a schematic block diagram of another signals extractor cooperating with a channel equalizer according to an embodiment of the invention is depicted.

In an embodiment a second signals extractor SE2 is a variant use of the first signals extractor SE1. The first optical transceiver OT1 further comprises a channel estimator EST. The channel estimator EST is a function or device adapted for performing estimations of parameters inherent to the channels on which the optical signals such as the first optical signal OS and the combined optical signal COS are transiting. The channel estimator EST is adapted to evaluate a complex-valued channels matrix. Said channel estimator EST cooperates with the delay means DM and with the signals extractor SE2.

The delayed first electrical signal ES1 is considered as an interfering signal on the first optical receiver RX1 side which receives the combined optical signal COS that comprises the second electrical signal ES2 that is of interest for the first optical transceiver OT1. The delayed first electrical signal ES1 is inputted to the channel estimator EST in order to train it in the channel estimation process. Such training allows the channel estimator EST to process the combined electrical signal CES for outputting the estimated combined electrical signal ECS. Said estimated combined electrical signal ECS benefits from the channel estimation accurately performed by the channel estimator EST that is able to compensate the effects from the impairments, attenuations, signals degradations, that damage the combined optical signal COS, and/or the first electrical signal ES1 while reaching the second optical regenerator OR2.

In an example, the channel estimator EST processes the delayed first electrical signal ES1 and the combined electrical signal CES for performing a channel estimation according to pilot based detection such as a Maximum Likelihood Square Error or Minimum Mean Square Error (MMSE).

The resulting estimated combined electrical signal ECS is provided to the signals combiner SC2 that is able to extract the second electrical signal ES2 even in cases where the received combined optical signal COS has suffered from deterioration and that the informative parts embedded into said combined optical signal COS may be more difficult to distinguish.

Referring to figure **FIG. 9,** a schematic block diagram of functions from an optical regenerator according to an embodiment of the invention is depicted.

In an embodiment, the second optical regenerator OR2 comprises the first signals combiner SC1 as depicted by the figure FIG. 4.

In an example, the first regenerator receiver RR1 comprises the first optical to electrical device OE1, and the second regenerator receiver RR2 comprises the second optical to electrical device OE2. More particularly, the first regenerator receiver RR1 and the second regenerator receiver RR2 respectively comprise each functions such as a 90° hybrid polarization diverse receivers (Pol-diverse 90° hybrid) cooperating with local oscillators, sampling functions, chromatic dispersion compensation functions (CD compensation), polarization demultiplexer equalization function (Pol demux equalization), carrier frequency estimation functions (CFE), carrier phase estimation functions (CPE), demodulation decision functions, sample demappers functions cooperating with Forward Error Correction (FEC) functions. The cooperation of said functions allows the first regenerator receiver RR1 along with the first optical to electrical device OE1 to convert the first optical signal OS1 into the first electrical signal ES1. Similarly the second regenerator receiver RR2 along with the second optical to electrical device OE2 converts the second optical signal OS2 into the second electrical signal ES2.

The first regenerator transmitter RT1 comprises the first signals combiner SC1 and the first electrical to optical device E01. The first signals combiner SC1 comprises the "XOR" logical operator for combining the first electrical signal ES1 and the second electrical signal ES2 into the combined electrical signal CES. The combined electrical signal CES is provided to a Forward Error Correction (FEC) function cooperating with a sample mapper function. Output of said sample mapper function is further processed by four branches of digital to analog converters (DAC) cooperating with amplifier (RF amp) which modulate laser signals originating from a laser source. In an example the laser source is splitted into 2 laser signals, each being further separated for feeding two pairs of I/Q branches. The two pairs of I/Q branches are then combined for generating the combined optical signal COS.

Referring to figure **FIG. 10,** a schematic block diagram of functions from another optical regenerator according to an embodiment of the invention is depicted.

In an embodiment, the first regenerator transmitter RT1 from the second optical regenerator OR2 comprises the second signals combiner SC2 as depicted by the figure FIG. 5.

In an example, the first regenerator RR1 and the second regenerator RR2 are similar to the ones depicted in figure FIG. 9, and comprising the same functions for converting the respective first optical signal OS1 and second optical signal OS2 into the first electrical signal ES1 and the second electrical signal ES2.

Said first electrical signal ES1 and second electrical signal ES2 are provided to the second signals combiner SC2. The first electrical signal ES1 is processed by a Forward Error Corrector function associated with a sample mapper (FEC/Mapper), comprised in the second signals combiner SC2, for generating the first weighed electrical signal WS1 according to the first coefficient C1. The second electrical signal ES2 is processed by another Forward Error Corrector function associated with a another sample mapper (FEC/Mapper), also comprised in the second signals combiner SC2, for generating the second weighted electrical signal WS2. The generated first weighted electrical signal WS1 and second weighted electrical signal WS2 are combined by the fourth operator OP4, which is a sample adder in an example. The fourth operator outputs the combined electrical signal CES.

The combined electrical signal CES is converted into the optical domain by the first electrical to optical device E01. For that purpose, in an example, the combined electrical signal CES is further processed by four branches of digital to analog circuits (DAC) cooperating with amplifier (RF amp) which modulate laser signals originating from a laser source. In an example the laser source is splitted into 2 laser signals, each being further separated for feeding two pairs of I/Q branches. The two pairs of I/Q branches are then combined for generating the combined optical signal COS. In an embodiment, said resulting combined optical signal COS is the superposition coding of the first optical signal OS1 and the second optical signal OS2, each being weighted respectively by alpha factor and (1 - alpha) factor.

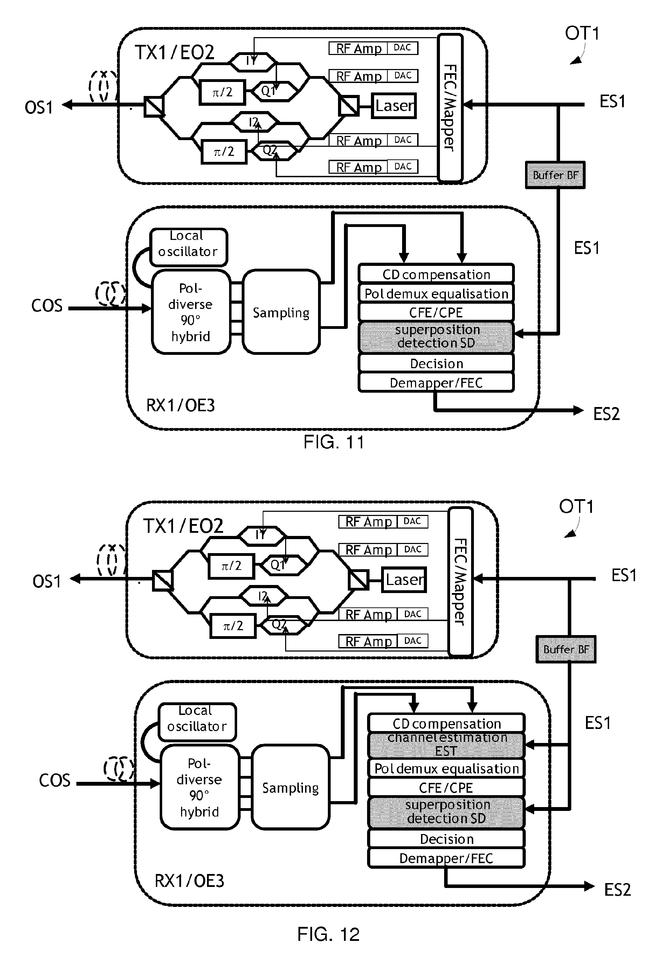

Referring to figure **FIG. 11,** a schematic block diagram of functions from an optical transceiver according to an embodiment of the invention is depicted.

In an embodiment, the first optical transceiver OT1 comprises the first signals extractor SE1 as depicted in figure FIG. 7.

An electrical transmit signal, such as the first electrical signal ES1, that carries informative data addressed to the second optical transceiver OT2, is managed by the first optical transmitter TX1. Said first optical transmitter TX1 comprises a Forward Error Corrector function associated to a mapper (FEC/Mapper) that process the electrical transmit signal. The processed electrical signal is then fed into the second electrical to optical device E02, comprised in the first optical transmitter TX1. The second electrical to optical device E02 comprises four branches of digital to analog converters (DAC) associated with amplifier (RF amp). These four branches feed I/Q modulators that modulate laser signals originating from a laser source. The second electrical to optical device E02 outputs an optical transmit signal such as the first optical signal OS1. The generated optical transmit signal is then transmitted on the lightpath that connects the first optical transmitter OT1 to the respective second optical regenerator OR2 and second optical transceiver OT2.

The first optical receiver RX1 is adapted to receive an optical receive signal. In an embodiment such optical receive signal is the combined optical signal COS received from the second optical regenerator OR2. The optical receive signal as received by the first optical receiver RX1 is the combination of a delayed optical transmit signal as transmitted by the first optical transmitter TX1 and of an informative optical signal such as the second optical signal OS2 as transmitted by the second optical transceiver OT2. Said informative optical signal is generated from an informative electrical signal such as the second electrical signal ES2.

In an example, the first optical receiver RX1 processes the optical receive signal with a 90° hybrid polarization diverse receiver (Pol-diverse 90° hybrid) cooperating with a local oscillator, followed by a sampling function, a chromatic dispersion compensation function (CD compensation), a polarization demultiplexer equalization function (Pol demux equalization), a carrier frequency estimation function (CFE), and a carrier phase estimation (CPE).

The intermediate resulting signal from above processing, such as the combined electrical signal CES, is fed into the signals extractor SE that operates the superposition coding detector SD in an example. The superposition coding detector SD also cooperates with the buffer BF for delaying the electrical transmit signal. The superposition coding detector SD is enabled to estimate and subtract the contribution of the delayed electrical transmit signal.

The output of the superposition coding detector SD is fed into a sample decision function (Decision) which cooperates with a demapper and Forward Error Corrector function. Such processing enables the signals extractor SE2 to extract the informative electrical signal from the received optical transmit signal.

In another embodiment, the first optical transceiver OT1 comprises the signals extractor SE. Said signals extractor SE comprises a "XOR" logical operation function. The signals extractor SE cooperates with the delay means DM that provides the delayed electrical transmit signal. Through the "XOR" logical operation function, the signals extractor SE is enabled for extracting from the electrically converted optical receive signal, the informative electrical signal according to the delayed electrical transmit signal.

Referring to figure **FIG. 12,** a schematic block diagram of functions from another optical transceiver according to an embodiment of the invention is depicted.

In an embodiment, the first optical transceiver OT1 comprises the second signals extractor SE2 as depicted in figure FIG. 8.

As depicted in figure FIG. 11, an electrical transmit signal such as the first electrical signal ES1, comprising informative data addressed to the second optical transceiver OT2, is processed and converted by the first optical transmitter TX1, that comprises the second electrical to optical device E02. Such conversion involves functions such as a Forward Error Corrector function along with a mapper function, and digital to analog conversion branches that modulates laser signals originated from a laser source, resulting in an optical transmit signal to be emitted by the firs optical transmitter TX1.

Likewise depiction of figure FIG. 11, an optical receive signal such as the combined optical signal COS is received by the first optical receiver RX1 that cooperates with the third optical to electrical device OE3. Said optical receive signal is processed by a 90° hybrid polarization diverse receiver (Pol-diverse 90° hybrid) cooperating with a local oscillator, followed by a sampling function, a chromatic dispersion compensation function (CD compensation).

The resulting intermediate electrical receive signal, such as the combined electrical signal CES, is fed into the channel estimator EST. Said channel estimator EST is provided by a delayed electrical transmit signal which has been buffered by the buffer BF which acts as the delay means DM. The channel estimator EST performs a channel estimation with the two inputs, the intermediate electrical receive signal.

The output signal from the channel estimator EST is further processed by a polarization demultiplexer equalization function (Pol demux equalization), a carrier frequency estimation function (CFE), and a carrier phase estimation (CPE).

Resulting intermediate electrical signal is then fed into the second signals extractor SE2. In an embodiment the superposition coding detector SD performs the extraction of the informative signals by using the channel estimator EST result and with the delayed electrical transmit signal that is provided by the buffer BF.

The superposition coding detector SD further fed a sample decision function that connects with a demapper and a Forward Error Corrector function (Demapper/FEC). It results into the extraction of the informative electrical signal, such as the second electrical signal ES2, that was carried by the optical receive signal along with the electrical transmit signal.

The superposition coding process according to an embodiment of the invention is now detailed from the standpoint of the second optical regenerator OR2.

It is considered that the second optical regenerator OR2 is constrained by an average power constraint P for communicating with the respective first optical transceiver OT1 and second optical transceiver OT2. The received samples on theses respective optical transceivers destination are respectively:

$$\mathbf{y}_{OT1} = \mathbf{H}_{OT1}\mathbf{x} + \mathbf{n}_{OT1} \text{ and } \mathbf{y}_{OT2} = \mathbf{H}_{OT2}\mathbf{x} + \mathbf{n}_{OT2}$$

Where:

- $\mathbf{H}_{OT1}$ is the complex channel gain from second optical regenerator OR2 to destination first optical transceiver OT1.
- $\mathbf{H}_{OT2}$ is the complex channel gain from second optical regenerator OR2 to destination second optical transceiver OT2.
- $\mathbf{n}_{OT1}$ is an additive Gaussian noise experienced on the lightpath between the second optical regenerator OR2 and destination first optical transceiver OT1.
- $\mathbf{n}_{OT2}$ is an additive Gaussian noise experienced on the lightpath between the second optical regenerator OR2 and destination first optical transceiver OT1.
- $\mathbf{x}$ is the combined electrical signal CES resulting in the superposition coding of the first electrical signal ES1 and second electrical signal ES2.

The optical signal $\mathbf{x}$ obtained from superposition coding can be expressed as function of the first electrical signal ES1, the second electrical signal ES2, the first coefficient C1 and the second coefficient C2. In an embodiment said coefficients can also be expressed as function of the alpha factor.

$$\mathbf{x} = \left(\sqrt{\alpha P}\right) * ES1 + \left(\sqrt{(1-\alpha)P}\right) * ES2 \text{ with } \alpha \in [0;1] \quad (1)$$

Where:

- ES1 denotes complex-valued data symbol of samples from the first electrical signal ES1,
- ES2 denotes complex-valued data symbol of samples from the second electrical signal ES2,
- P denotes the power constraint applied to the second optical regenerator OR2.

The superposition coding process according to embodiments of the invention is now detailed from the standpoint of the first optical transceiver OT1.

In a first case as depicted in figures FIG. 7 and FIG. 11, the first optical transceiver OT1 has perfect knowledge of the channel realization $\mathbf{H}_{OT1}$. In an example, the first optical transceiver OT1 is adapted to measure precisely such channel realization or is configured with parameters reflecting characteristics of the lightpaths.

In an embodiment the superposition coding detector SD is removing the contribution of the interfering electrical transmit signal such as the first electrical signal ES1. Such cancellation is perfect since the electrical transmit signal is known and fed by the transmitting chain to the delay means DM. Assuming that power constraint P is unitary, the signal inputted to the superposition coding detector SD can be expressed as:

$$\mathbf{H}_{OT1}^{-1}\mathbf{y}_{OT1} = \mathbf{x} + \mathbf{H}_{OT1}^{-1}\mathbf{n}_{OT1} = \sqrt{\alpha} * ES1 + \sqrt{(1-\alpha)} * ES2 + \mathbf{H}_{OT1}^{-1}\mathbf{n}_{OT1}$$

The output of the superposition coding detector SD can be expressed as:

$$\mathbf{H}_{OT1}^{-1}\mathbf{y}_{OT1} - \sqrt{\alpha} * ES1 = \sqrt{(1-\alpha)}ES2 + \mathbf{H}_{OT1}^{-1}\mathbf{n}_{OT1}$$
$$= \mathbf{z}_{OT1}$$

The output signal $\mathbf{z}_{OT1}$ is similar to a standard transmission with no superposition coding. Thus, symbols can be discriminated with no penalty from the superposition coding transmission.

In second case as depicted in figures FIG. 8 and FIG. 12, the first optical transceiver OT1 has an imperfect knowledge of the channel realization $\mathbf{H}_{OT1}$. The interfering signal within the electrical receive signal / combined electrical signal CES is used to train the channel estimator EST, for instance in a multi-modulus algorithm, or alternatively to replace the training sequences if the signal to noise ratio of the optical receive signal is high enough.

The channel estimate using the interfering signal can be computed with classical criteria used with pilot-based detection such as Maximum Likelihood or Minimum mean square error. The MMSE channel estimate for a single tap channel and training sequences is written as:

$$\widehat{\mathbf{H}}_{OT1\_MMSE} = \mathbf{Y}_{OT1}\left(\mathbf{X}^{H}\mathbf{R}_{H_{OT1}}\mathbf{X} + 2\sigma^2_{N_{OT1}}\mathbf{I}\right)^{-1}\mathbf{X}^{H}\mathbf{R}_{H_{OT1}}$$

Where:

- $\mathbf{Y}_{OT1}$ is a matrix stacking vectors $\mathbf{y}_{OT1}$ of received symbols,
- $\mathbf{X}^{H}$ is a matrix stacking vectors x of samples obtained from superposition coding,
- $\mathbf{R}_{H_{OT1}} = E\{\mathbf{H}_{OT1}^{H}\mathbf{H}_{OT1}\}$,
- $\sigma^2_{N_{OT1}}$ is the variance of the Gaussian noise $\mathbf{n}_{OT1}$,
- exponent $H$ denotes the Hermitian operator,
- I being the identity matrix

Considering the superposition coding generated signal, the contribution $\sqrt{(1-\alpha)} *$

*ES2* can be considered as the error of the known electrical transmit signal $\sqrt{\alpha} * ES1$. The contribution $\sqrt{(1-\alpha)} * ES2$ is a zero mean random variable independent of the electrical transmit signal with a variance $\sigma_{ES2}^2$. The MMSE channel estimate can thus be expressed as:

$$\hat{H}_{OT1\_MMSE} = Y_{OT1}\left(\alpha^2 ES1^H R_{H_{OT1}} ES1 + \sigma_{ES2}^2 R_{H_{OT2}} + 2\sigma_{OT1}^2 I\right)^{-1} A^H R_{H_A} \; (2)$$

In an example, the channel estimate is performed with a training phase derived from the interfering and known electrical transmit signal. In such case, the channel estimator EST inserts a training phase for initializing a multi-modulus algorithm for instance:

- Step #1: compute the channel estimate with a metric such as a linear MMSE channel estimate as depicted in (2),
- Step #2: initialize the coefficient of the multi-modulus algorithm with the result of step #1.

In another example, the training sequences are replaced by a training derived from the interfering electrical transmit signal. In such case, the computation of the channel estimate with a metric such as in (2) is tightly dependent on the delayed electrical signal. Such approach is more simple but requires that the allocated power to the interfering electrical transmit signal is high enough.

In an embodiment, the second optical regenerator OR2 is adapted to perform superposition coding of the first optical signal OS1 and the second optical signal OS2, each using different modulation schemes. It allows the second optical regenerator OR2 to sustain asymmetric traffic over bidirectional optical links, which can typically be the case when one direction, for example the forward link drains more data traffic than the other direction, for example the reverse link.

In an embodiment, the first optical transceiver OT1 comprises a selector for enabling the receiving of optical signals such as the combined optical signal COS, or conventional optical signals such as the second optical signal OS2. It allows the first optical transceiver OT1 adapted to the various embodiments of the invention to be backward compatible with classical optical network that comprises basic optical regenerators.

In an embodiment, a first method for regenerating optical signals performed by the second optical regenerator OR2 comprises the following steps:

- first step: receiving the first optical signal OS1 from the first optical transceiver OT1,
- second step: receiving the second optical signal OS2 from the second optical transceiver OT2,
- third step: converting the first optical signal OS1 into the first electrical signal ES1,
- fourth step: converting the second optical signal OS2 into the second electrical signal ES2,
- fifth step: combining the first electrical signal ES1 and the second electrical signal ES2 into the combined electrical signal CES,
- sixth step: converting the combined electrical signal CES into the combined optical signal COS,
- seventh step: transmitting the combined optical signal COS.

In an embodiment, a second method for processing an optically regenerated optical signal performed by the first optical transceiver OT1 comprises the following steps:

- first step: receiving the optical receive signal such as the combined optical signal COS from the second optical regenerator OR2,
- second step: converting the optical receive signal into the electrical receive signal,
- extracting the informative electrical signal, such as the second electrical signal ES2, from the electrical receive signal, said electrical receive signal being generated from the combination of said informative electrical signal and a delayed electrical transmit signal, such as the first electrical signal ES1, that was transmitted by the first optical transmitter OT1.

The second optical regenerator OR2 according to embodiments of the invention advantageously allows to transmit the combined optical signal COS into two directions, by using a single transmitting chain. The second optical regenerator OR2 comprises less optical components compared to other optical regenerator. The reduction of components advantageously lowers the cost of the second optical regenerator OR2 in terms of design and manufacturing. Said reduction of components also benefits to the energy consumption which reduced. Another benefit of the reduction of components is the increased reliability of the optical system.

The second optical regenerator OR2 offers an efficient combining through the signals combiner SC that implements the "XOR" logical operation.

The second optical regenerator OR2 offers a flexible combining through the signals combiner SC that implements superposition coding of inputs optical signals. It enables the second optical regenerator OR2 to manage asymmetrical traffic between two directions if required.

The optical regeneration system ORS according to embodiments of the inventions allows a flexible regeneration of optical signal. The combination of two optical signals into a combined optical signal at the second optical regenerator OR2 allows to reduce the complexity of said regeneration equipment. The reduction of the complexity translates in a lower Capital Expenditures (CAPEX) as fewer expensive hardware components are needed. The reduction of complexity also translates in a lower Operational Expenditures (OPEX) as less energy consumption is possible with fewer greedy hardware components. The first optical transceiver OT1 is adapted to receive, process the combined optical signal COS which is the regeneration of the two optical signals received by the second optical regenerator OR2. The first optical transceiver OT1 offers a practical an efficient restitution of the informative part of one of the optical signal embedded in the combined optical signal COS. Said restitution is achieved with cost effective processing such as logical operation for separating informative parts, or with a channel estimation combined with a signal separator implementing a superposition coding detection.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. An optical regenerator (OR2) for regenerating optical signals, comprising a first regenerator receiver (RR1) for receiving a first optical signal (OS1) and a second regenerator receiver (RR2) for receiving a second optical signal (OS2), the optical regenerator (OR2) further comprising:

   • a first optical to electrical device (OE1) adapted for cooperating with the first regenerator receiver (RR1) for converting the first optical signal (OS1) into a first electrical signal (ES1),
   • a second optical to electrical device (OE2) adapted for cooperating with the second regenerator receiver (RR2) for converting the second optical signal (OS2) into a second electrical signal (ES2),
   • a signals combiner (SC) adapted to combine the first electrical signal (ES1) and the second electrical signal (ES2) for generating a combined electrical signal (CES),
   • an electrical to optical device (EO1) for converting the combined electrical signal (CES) into the combined optical signal (COS)
   • a regenerator transmitter (RT1) for transmitting the combined optical signal (COS).

2. An optical regenerator (OR2) according to claim 1, wherein the signals combiner (SC) is adapted to perform a "XOR" logical operation for combining the first electrical signal (ES1) and the second electrical signal (ES2) for generating the combined electrical signal (CES).

3. An optical regenerator (OR2) according to claim 1, wherein the signals combiner (SC) is adapted to weight the first electrical signal (ES1) with a first coefficient (C1) and to weight the second electrical signal (ES2) with a second coefficient (C2), and to combine the respective weighted first electrical signal (WS1) and weighted second electrical signal (WS2) for generating the combined electrical signal (CES).

4. An optical regenerator (OR2) according to claim 3, wherein the first coefficient (C1) and the second coefficient (C2) are normalized complex values, the second coefficient (C2) being dependent of the first coefficient (C1).

5. An optical regenerator (OR2) according to any of the claims 1 to 4, wherein the regenerator transmitter (RT1) is adapted to transmit the combined optical signal (COS) on at least two optical ports (P1; P2) comprised in the optical regenerator (OR2).

6. An optical transceiver (OT1) for processing an optical receive signal, said optical transceiver (OT1) comprising:

   • an optical transmitter (TX1),
   • an electrical to optical device (E02),
   • an optical receiver (RX1) adapted for receiving the optical receive signal (COS),
   • an optical to electrical device (OE3) adapted for converting the optical receive signal (COS) into an electrical receive signal (CES),
   • a signal extractor (SE),
   • an output from the electrical to optical device (E02) being connected to an input from the optical transmitter (TX1),
   • an output from the optical receiver (RX1) being connected to an input from the optical to electrical device (OE3),
   • an output from said optical to electrical device (OE3) being connected to an input from the signal extractor (SE),

   said signals extractor (SE) being adapted for extracting an informative electrical signal (ES2) from the electrical receive signal (CES), said electrical receive signal (CES) comprising the combination of said informative electrical signal (ES2) and of a delayed electrical transmit signal (ES1), said electrical transmit signal (ES1) having been converted into an optical transmit signal (OS1) by the electrical to optical device (E02), said optical transmit signal (OS1) having been transmitted by the optical transmitter (TX1).

7. An optical transceiver (OT1) according to claim 6, wherein the signals extractor (SE) cooperates with a delay means (DM) adapted for delaying the electrical transmit signal (ES1) and wherein the signals extractor (SE) is adapted to extract the informative electrical signal (ES2) from the electrical receive signal (CES) according to said electrical transmit signal (ES1) delayed by said delay means (DM).

8. An optical transceiver (OT1) according to claim 7, wherein the signals extractor (SE) is adapted to perform a "XOR" logical operation between the electrical receive signal (CES) and the electrical transmit signal (ES1) delayed by the delay means (DM) for extracting the informative electrical signal (ES2).

9. An optical transceiver (OT1) according to claim 7, wherein the signals extractor (SE) is adapted to extract the informative electrical signal (ES2) from the electrical receive signal (CES) according to a first coefficient (C1) and a second coefficient (C2), the electrical receive signal (CES) being generated from the combining from the electrical transmit signal (ES1) weighted by the first coefficient (C1) and the informative electrical signal (ES2) weighted by the second coefficient (C2).

10. An optical transceiver (OT1) according to claim 9, wherein the signals extractor (SE) is adapted to extract the informative electrical signal (ES2) from the electrical signal (CES) by cancelling a contribution of the electrical transmit signal (ES1) weighted by the first coefficient (C1) on said electrical receive signal (CES).

11. An optical transceiver (OT1) according to claim 10, further comprising a channel estimator (EST) adapted for performing a channel estimation on the electrical receive signal (CES) according to the electrical transmit signal (ES1) delayed by the delay means (DM), said channel estimator (EST) cooperating with the signals extractor (SE) for cancelling the contribution of the electrical transmit signal (ES1) weighted by the first coefficient (C1) on said electrical receive signal (CES).

12. An optical regeneration system (ORS) comprising:

   • an optical transceiver (OT1) according to any of the claims 6 to 11, for transmitting a first optical signal (OS1) and for receiving a combined optical signal (COS),
   • an optical regenerator (OR2) according to any of the claims 1 to 5, for receiving the first optical signal (OS1) and a second optical signal (OS2), and for generating the combined optical signal (COS) according to said first optical signal (OS1) and said second optical signal (OS2).

OTA · OR1 · OTB

TXA · RBA · RXB

OSA · OSA'

RXA · RBB · TXB

OSB' · OSA

FIG. 1

ORS

OT1 · OR2 · OT2

TX1 · RR1 · RR2 · TX2

OS1' · OS2'

L1 · L2

RX1 · SC · RX2

L3

COS · COS

RT1

FIG. 2

FIG. 3

FIG. 4

EP 3 051 722 A1

FIG. 5

FIG. 6

FIG. 7

FIG. 8

19

FIG. 9

FIG. 10

FIG. 11

FIG. 12

Europäisches
Patentamt

European
Patent Office

Office européen
des brevets

# EUROPEAN SEARCH REPORT

Application Number

EP 15 15 3491

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 219 320 A2 (WESTINGHOUSE ELECTRIC CORP [US]) 22 April 1987 (1987-04-22) | 1,5 | INV. H04B10/29 H04B10/40 |
| Y | * figure 2 * | 12 | |
| A | * page 6, line 28 - page 7, line 10 * | 2 | |
| X | US 4 747 094 A (SAKAGUCHI HARUO [JP] ET AL) 24 May 1988 (1988-05-24) | 1,3,4 | |
| A | * figures 8, 11 * | 2 | |
| X | US 2013/044585 A1 (KONG SEOK-YOUNG [KR] ET AL) 21 February 2013 (2013-02-21) | 1,3,4 | |
| A | * figure 7 * | 2 | |
| X | EP 0 190 662 A2 (WESTINGHOUSE ELECTRIC CORP [US]) 13 August 1986 (1986-08-13) | 1 | |
| A | * figure 6 * | 2 | |
| X | US 4 581 770 A (HAWORTH ROBERT F [US]) 8 April 1986 (1986-04-08) | 1 | |
| A | * figure 2 * | 2 | |
| X | EP 0 606 330 A1 (BRITISH TELECOMM [GB]) 20 July 1994 (1994-07-20) | 6-8 | TECHNICAL FIELDS SEARCHED (IPC) |
| Y | * figure 3 * * paragraph [0014] - paragraph [0020] * | 12 | H04B |
| X | US 8 606 117 B1 (TURNER MICHAEL D [US] ET AL) 10 December 2013 (2013-12-10) | 6 | |
| A | * abstract * * figure 7 * * column 5, line 56 - line 67 * | 12 | |
| A | EP 2 768 161 A1 (BOEING CO [US]) 20 August 2014 (2014-08-20) * abstract * * figures 4, 6 * | 6-12 | |

The present search report has been drawn up for all claims

| Place of search | Date of completion of the search | Examiner |
|---|---|---|
| Munich | 14 October 2015 | Ganzmann, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..............................................................................................

& : member of the same patent family, corresponding document

EPO FORM 1503 03.82 (P04C01)

Europäisches
Patentamt

European
Patent Office

Office européen
des brevets

Application Number

EP 15 15 3491

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

## LACK OF UNITY OF INVENTION
### SHEET B

Application Number

EP 15 15 3491

The Search Division considers that the present European patent application does not comply with the requirements of unity of invention and relates to several inventions or groups of inventions, namely:

```
1. claims: 1-5

      Optical regenerator with an XOR combiner
                    ---

2. claims: 6-12

      Optical transceiver with a signal extractor
                    ---
```

## ANNEX TO THE EUROPEAN SEARCH REPORT
## ON EUROPEAN PATENT APPLICATION NO.

EP 15 15 3491

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2015

| Patent document cited in search report | | | Publication date | Patent family member(s) | | | Publication date |
|---|---|---|---|---|---|---|---|
| EP | 0219320 | A2 | 22-04-1987 | CA | 1245291 | A | 22-11-1988 |
| | | | | DE | 3687503 | D1 | 25-02-1993 |
| | | | | EP | 0219320 | A2 | 22-04-1987 |
| | | | | JP | H0771043 | B2 | 31-07-1995 |
| | | | | JP | S6292530 | A | 28-04-1987 |
| | | | | MX | 160207 | A | 27-12-1989 |
| | | | | US | 4688260 | A | 18-08-1987 |
| US | 4747094 | A | 24-05-1988 | JP | S6167398 | A | 07-04-1986 |
| | | | | US | 4747094 | A | 24-05-1988 |
| US | 2013044585 | A1 | 21-02-2013 | JP | 5784707 | B2 | 24-09-2015 |
| | | | | JP | 2013531913 | A | 08-08-2013 |
| | | | | KR | 20110122058 | A | 09-11-2011 |
| | | | | US | 2013044585 | A1 | 21-02-2013 |
| | | | | WO | 2011139047 | A2 | 10-11-2011 |
| EP | 0190662 | A2 | 13-08-1986 | EP | 0190662 | A2 | 13-08-1986 |
| | | | | ES | 8708065 | A1 | 16-11-1987 |
| | | | | JP | S61182339 | A | 15-08-1986 |
| | | | | US | 4641373 | A | 03-02-1987 |
| US | 4581770 | A | 08-04-1986 | NONE | | | |
| EP | 0606330 | A1 | 20-07-1994 | CA | 2114729 | A1 | 15-04-1993 |
| | | | | DE | 69231406 | D1 | 05-10-2000 |
| | | | | DE | 69231406 | T2 | 29-03-2001 |
| | | | | EP | 0606330 | A1 | 20-07-1994 |
| | | | | ES | 2151493 | T3 | 01-01-2001 |
| | | | | JP | 3281378 | B2 | 13-05-2002 |
| | | | | JP | H06511364 | A | 15-12-1994 |
| | | | | SG | 48932 | A1 | 18-05-1998 |
| | | | | US | 5453865 | A | 26-09-1995 |
| | | | | WO | 9307687 | A1 | 15-04-1993 |
| US | 8606117 | B1 | 10-12-2013 | NONE | | | |
| EP | 2768161 | A1 | 20-08-2014 | CN | 103997374 | A | 20-08-2014 |
| | | | | EP | 2768161 | A1 | 20-08-2014 |
| | | | | JP | 2014161010 | A | 04-09-2014 |
| | | | | US | 2014233958 | A1 | 21-08-2014 |

EPO FORM P0459

For more details about this annex : see Official Journal of the European Patent Office, No. 12/82